# EUROPEAN PATENT APPLICATION

(11) **EP 2 549 166 A1**
(43) Date of publication of application: **23.01.2013**
(21) Application number: 11174821.6
(22) Date of filing: 21.07.2011
(51) Int. Cl.: F16L 55/48

(54) **Apparatus for indicating passage of device in pipeline**

(71) Applicant: Polyeurope International Limited, Heighington Business Park Newton Aycliffe County Durham DL5 6SH (GB)
(72) Inventor: The designation of the inventor has not yet been filed
(74) Representative: Vinsome, Rex Martin

(57) **Abstract**

An apparatus (2) for indicating passage of a pig in a pipeline is disclosed. The apparatus comprises a trigger (26) adapted to protrude into a bore of a pipeline and to engage a pig passing along the pipeline, and a body (8) adapted to be mounted to an aperture (6) in a wall of the pipeline. A first actuator member (40) is adapted to move relative to the body as a result of a pig passing along the pipeline engaging the trigger, and a second actuator member (58) is adapted to move relative to the body as a result of magnetic attraction between the first and second actuator members. A flag (72) is actuated by movement of the second actuator member relative to the body to provide a visible indication of engagement of the pig in the pipeline with the trigger.

## Description

The present invention relates to an apparatus for indicating passage of a device in a pipeline, and relates particularly, but not exclusively, to a pig signaller for indicating passage of a pipeline pig in a fluid pipeline.

Devices known as pig signallers are used to provide a visual indication of passage of a pipeline pig, often in order to determine the position of a pig. Although remote sensing techniques exist for obtaining signals indicating the position of a pig in a pipeline, such techniques can be expensive to operate and may have limited reliability. Generation of a signal by means of mechanical engagement with the pig is therefore often preferred.

Pig signallers generating signals by mechanical means generally have a trigger part protruding into the bore of a pipeline, which is generally at high pressure, such that the trigger part is engaged by a passing pipeline pig to cause actuation of a visual indicator on the exterior of the pipeline, where the exterior is generally at atmospheric pressure. Because of the pressure difference, it is often difficult to provide a mechanical connection between the trigger part engaged by the pig and the visual indicator. As a result, sliding fluid seals generally need to be used, which add to the difficulty of operation and cost of the apparatus.

One arrangement is known in which a pig signaller mounted in a fluid tight manner to a wall of the pipeline has a first actuator carrying magnets in fluid communication with the interior of the pipeline and which repels a second actuator carrying magnets in fluid communication with the exterior of the pipeline by means of a magnetic repulsive force to actuate a visual indicator. The magnetic repulsive force extends across a barrier separating the high and low pressure regions.

This arrangement suffers from the drawback that it is difficult to provide an arrangement in which magnetic actuators generating sufficient force can be accommodated in a compact pig signaller. This therefore has the consequence that in order to generate enough mechanical force to reliably actuate the visual display, large magnets must be use, as a result of which the apparatus is bulky and expensive.

Preferred embodiments of the present invention seek to overcome one or more of the above disadvantages of the prior art.

According to the present invention, there is provided an apparatus for indicating passage of a device in a pipeline, the apparatus comprising:-
at least one trigger member adapted to protrude into a bore of a pipeline and to engage a device passing along the pipeline;
a body adapted to be mounted to an aperture in a wall of the pipeline and to form a seal with the aperture;
at least one first actuator member in fluid communication in use with the bore of the pipeline, wherein said first actuator member is adapted to move relative to the body as a result of a device passing along the pipeline engaging a said trigger member;
at least one second actuator member in fluid communication in use with the exterior of the pipeline, wherein at least one said first actuator member and/or at least one said second actuator member is adapted to generate a magnetic field in use such that at least one said second actuator member is adapted to move relative to the body as a result of magnetic attraction between said second actuator member and at least one said first actuator member moving relative to the body; and
at least one visible indicator device adapted to be actuated by movement of at least one said second actuator member relative to the body to provide a visible indication of engagement of a device in the pipeline with a said trigger member.

By providing an arrangement in which at least one first actuator member and/or at least one second actuator member is adapted to generate a magnetic field in use such that at least one second actuator member is adapted to move relative to the body as a result of magnetic attraction between the second actuator member and at least one first actuator member moving relative to the body, this provides the advantage of enabling larger forces to be generated for a given size of magnet than is the case with an apparatus utilising magnetic repulsive forces. This in turn enables the apparatus to be more compact in construction and more reliable in operation.

One of (i) at least one said first actuator member and (ii) at least one said second actuator member may define a respective first recess, and the other of (i) at least one said first actuator and (ii) at least one said second actuator member may be at least partially received within at least one said first recess.

This provides the advantage of increasing the area of cooperating said first and second actuator members facing each other, thereby increasing the magnetic flux density attracting the first and second actuator members towards each other. This in turn increases the actuation forces which may be generated for a given size of magnet.

At least one said first actuator member may define at least one respective said first recess, said body may define at least one said protrusion adapted to be at least partially received within a respective said first recess, and at least one said protrusion may define a respective second recess, wherein at least one said second actuator member is adapted to be at least partially received within at least one respective said second recess.

The apparatus may further comprise at least one biasing device for biasing at least one said first actuator member into engagement with at least one said trigger member to urge the trigger member towards an equilibrium position thereof.

This provides the advantage of enabling automatic resetting of inaccessible parts of the apparatus, i.e. those parts in fluid communication with the pressurised interior of the pipeline.

At least one said biasing device may be adapted to urge at least one said first actuator member into engagement with at least one said trigger member to urge the trigger member towards an equilibrium position thereof.

This provides the advantage of enable more compact construction of the apparatus by enabling at least one biasing member to reset the position of a first actuator member and a trigger member.

At least one said trigger member may have a respective first portion adapted to protrude into the bore of the pipeline, and a respective second portion at least partially received in said body in use and adapted to cause movement of at least one said first actuator member relative to the body as a result of pivoting of said second portion relative to the body.

At least one said second portion and at least one said first actuator member may be adapted to engage each other at substantially planar surfaces thereof.

This provides the advantage of enabling compact and simplified construction of the apparatus.

At least one said first portion may be flexible.

This provides the advantage of making the apparatus more robust by minimising the risk of damage to or breakage of the first portion by engagement with a device in the pipeline.

At least one said first portion may have at least one flexible spring member embedded in flexible material.

The visible indicator device may include at least one indicator member adapted to move from a first position to a second position in response to movement of at least one said second actuator member relative to the body.

At least one said indicator member may be adapted to be disengaged from at least one said second actuator member and biased towards said second position.

This provides the advantage of making the indicator device more reliable.

A preferred embodiment of the invention will now be described, by way of example only and not in any limitative sense, with reference to the accompanying drawings, in which:-
Figure 1 is a side cross sectional view of a pig signaller embodying the present invention mounted to an aperture in a wall of a pipeline;
Figure 2 is an end view of a trigger member of the pig signaller of Figure 1; and
Figure 3 is a side cross sectional view along the line A-A in Figure 2.

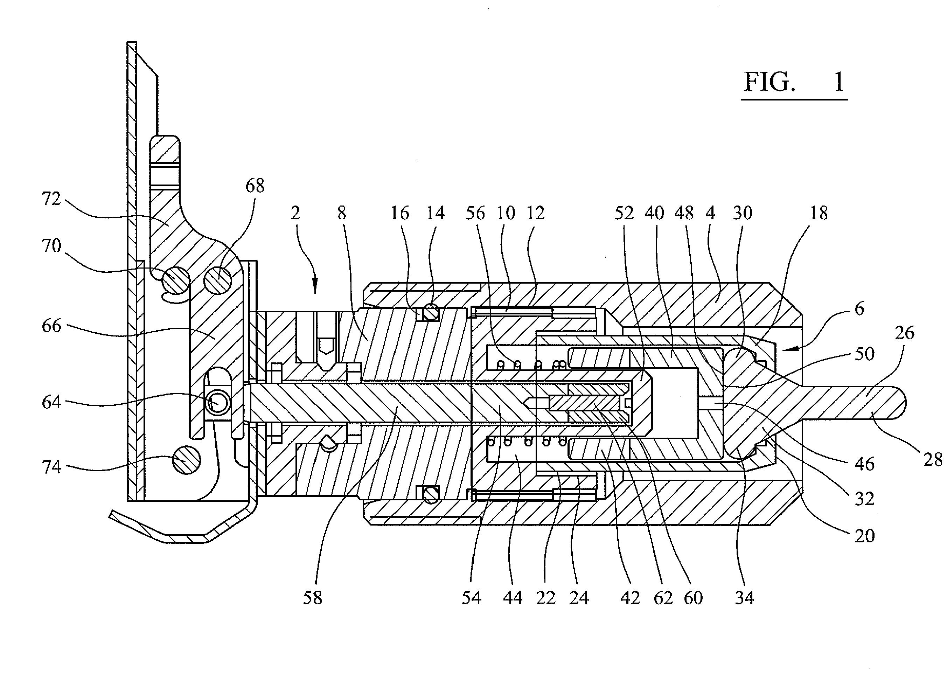

Referring to Figure 1, a pig signaller 2 embodying the present invention is mounted to a tubular boss 4 welded to a wall (not shown) of a pipeline and surrounding an aperture 6 in the wall of the pipeline. The pig signaller 2 has a solid body 8 mounted to an internal bore of the boss 4 by means of a screw thread 10 on an external surface of the body 8 which engages a cooperating screw thread 12 on the internal surface of the boss 4, and an O-ring 14 to form a fluid tight seal between the pressurised interior of the pipeline and the exterior of the pipeline which is at atmospheric pressure. The O-ring 14 is supported by a solid anti-extrusion ring 16 to maintain it in position.

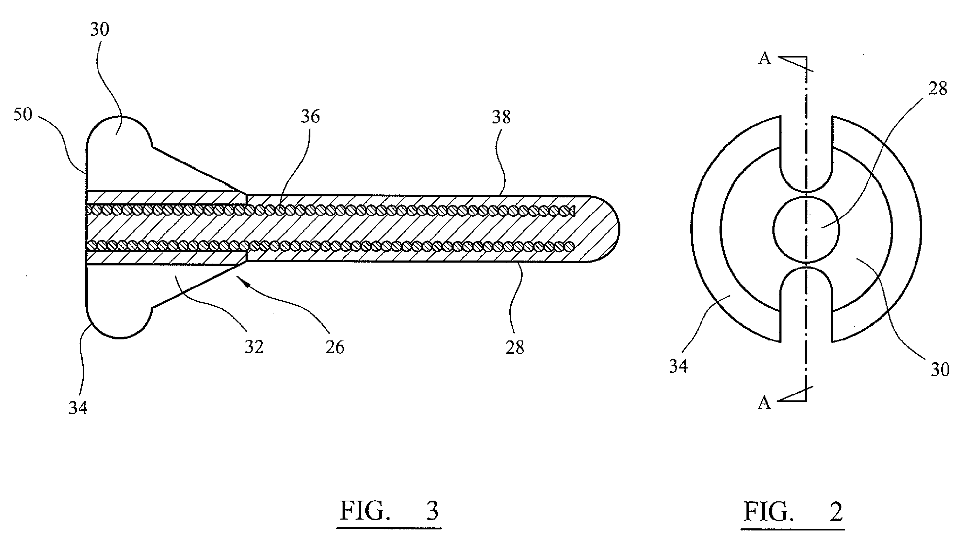

An end cap 18 defining an aperture 20 is mounted to the body 8 by means of cooperating screw threads 22, 24 on the body 8 and end cap 18 respectively, so as to retain a trigger 26. As shown in greater detail in Figures 2 and 3, the trigger 26 comprises a first part in the form of a stem 28 protruding into the bore of the pipeline and a second part in the form of a housing 30 retained by the end cap 18. The housing 30 has a generally frusto-conical part 32 and rounded parts 34 to enable pivoting of the trigger 26 relative to the end cap 18. The stem 28 comprises a flexible spring member 36 embedded within a polyurethane cover 38 and protrudes through aperture 20 into the interior of the bore of the pipeline.

A hollow first actuator member 40 having a first magnet 42 mounted to an end thereof remote from the trigger 26 is slidably mounted within a recess 44 defined by the body 8 and the end cap 18, and has an aperture 46 for allowing fluid communication between the inside and the outside of the first actuator member 40. The first actuator member 40 has a generally flat end face 48 for engaging a corresponding generally flat end face 50 on the housing 30 of the trigger 26. The body 8 defines a hollow protrusion 52 defining an internal recess 54 on which the first actuator member 40 is slidably received, and the first actuator member 40 is biased by means of a compression spring 56 into engagement with the trigger 28 towards an equilibrium position in which the stem 28 of the trigger 26 protrudes into the interior of the bore of the pipeline in a direction substantially parallel to a longitudinal axis of the body 8.

A second actuator member 58 has a second magnet 60 mounted to an end thereof by means of a screw 62 such that when the trigger 26 is located in its equilibrium position, the second magnet 60 is coaxially arranged within the first magnet 42, thereby maximising the magnetic flux between the first and second magnets 42, 60. The first and second magnets 42, 60 are arranged such that an attractive magnetic force causes axial movement of the second actuator member 58 when the first actuator member 40 moves axially in the recess 44 in the body 8. As a result, the second actuator member 58, which is in fluid communication with the atmosphere on the outside of the pipeline, follows movement of the first actuator member 40, which in turn is displaced by pivoting of the trigger 26 relative to the end cap 18 defining the recess 44 with the body 8.

The second actuator member 58 is mounted via pin 64 to a catch 66 mounted to a pivot 68 and held in position by a pin 70. The pin 70 is attached to a flag 72 which is urged by a torsion spring (not shown) about pivot 74.

The operation of the apparatus 2 will now be described.

As a pig passes along the pipeline, it engages the stem 28 of the trigger 26 and causes pivoting of the trigger 26 in the recess 44 defined by the end cap 18 and the body 8. As a result of pivoting of the housing 30 of the trigger 26 relative to the body 8, the first actuator member 40 is urged to the left against the action of the compression spring 56 as shown in Figure 1, as a result of which the second actuator member 58 is also urged to the left because of the attractive force between the first and second magnets 42, 60. As a result of movement of the second actuator member 58 to the right as shown in Figure 1, the catch 66 pivots about pivot 68 until pin 70 is released, which enables the flag 72 to pivot through 90 degrees about pivot 74 to provide a visual indication.

After passage of the pig, the first actuator member 40 is urged under the action of the compression spring 56 towards the right as shown in Figure 1, as a result of which the stem 28 of the trigger 26 returns to its equilibrium position. At the same time, the attractive force between the first and second magnets 42, 60 causes the second actuator member 58 to move to the right. The flag 72 is manually reset my rotating it against the action of the torsion spring (not shown) until the pin 70 is received by the catch 72.

It will be appreciated by persons skilled in the art that the above embodiment has been described by way of example only and not in any limitative sense, and that various alterations and modifications are possible without departure from the scope of the invention as defined by the appended claims.

## Claims

1. An apparatus for indicating passage of a device in a pipeline, the apparatus comprising:-
at least one trigger member adapted to protrude into a bore of a pipeline and to engage a device passing along the pipeline;
a body adapted to be mounted to an aperture in a wall of the pipeline and to form a seal with the aperture;
at least one first actuator member in fluid communication in use with the bore of the pipeline, wherein said first actuator member is adapted to move relative to the body as a result of a device passing along the pipeline engaging a said trigger member;
at least one second actuator member in fluid communication in use with the exterior of the pipeline, wherein at least one said first actuator member and/or at least one said second actuator member is adapted to generate a magnetic field in use such that at least one said second actuator member is adapted to move relative to the body as a result of magnetic attraction between said second actuator member and at least one said first actuator member moving relative to the body; and
at least one visible indicator device adapted to be actuated by movement of at least one said second actuator member relative to the body to provide a visible indication of engagement of a device in the pipeline with a said trigger member.

2. An apparatus according to claim 1, wherein one of (i) at least one said first actuator member and (ii) at least one said second actuator member defines a respective first recess, and the other of (i) at least one said first actuator and (ii) at least one said second actuator member is at least partially received within at least one said first recess.

3. An apparatus according to claim 2, wherein at least one said first actuator member defines at least one respective said first recess, said body defines at least one said protrusion adapted to be at least partially received within a respective said first recess, and at least one said protrusion defines a respective second recess, wherein at least one said second actuator member is adapted to be at least partially received within at least one respective said second recess.

4. An apparatus according to any one of the preceding claims, further comprising at least one biasing device for biasing at least one said first actuator member into engagement with at least one said trigger member to urge the trigger member towards an equilibrium position thereof.

5. An apparatus according to claim 4, wherein at least one said biasing device is adapted to urge at least one said first actuator member into engagement with at least one said trigger member to urge the trigger member towards an equilibrium position thereof.

6. An apparatus according to any one of the preceding claims, wherein at least one said trigger member has a respective first portion adapted to protrude into the bore of the pipeline, and a respective second portion at least partially received in said body in use and adapted to cause movement of at least one said first actuator member relative to the body as a result of pivoting of said second portion relative to the body.

7. An apparatus according to claim 6, wherein at least one said second portion and at least one said first actuator member are adapted to engage each other at substantially planar surfaces thereof.

8. An apparatus according to claim 6 or 7, wherein at least one said first portion is flexible.

9. An apparatus according to claim 8, wherein at least one said first portion has at least one flexible spring member embedded in flexible material.

10. An apparatus according to any one of the preceding claims, wherein the visible indicator device includes at least one indicator member adapted to move from a first position to a second position in response to movement of at least one said second actuator member relative to the body.

11. An apparatus according to claim 10, wherein at least one said indicator member is adapted to be disengaged from at least one said second actuator member and biased towards said second position.
